# EUROPÄISCHE PATENTSCHRIFT

(11) **EP 2 750 864 B1**
(45) Veröffentlichungstag und Bekanntmachung des Hinweises auf die Patenterteilung: **12.12.2018**
(21) Anmeldenummer: 12745449.4
(22) Anmeldetag: 31.07.2012
(51) Int. Cl.: B29C 65/02, B29C 65/78, B65H 21/02, B29C 65/08, B29C 65/16, B29C 65/22, B29C 65/50, B29L 9/00

(54) **VERFAHREN ZUM VERBINDEN VON TRANSFER- ODER LAMINIERFOLIENBAHNEN**
METHOD FOR JOINING TRANSFER OR LAMINATING FILM WEBS
PROCÉDÉ DE LIAISON DE BANDES DE FILM DE TRANSFERT OU DE LAMINAGE

(30) Priorität: 01.09.2011 DE 102011111786
(43) Veröffentlichungstag der Anmeldung: 09.07.2014
(73) Patentinhaber: OVD Kinegram AG, 6301 Zug (CH)
(72) Erfinder: HANSEN, Achim, CH-6300 Zug (CH); BERNET, Thomas, CH-6264 Pfaffnau (CH)
(74) Vertreter: Louis Pöhlau Lohrentz
(86) Internationale Anmeldenummer: PCT/EP2012/064913
(87) Internationale Veröffentlichungsnummer: WO 2013/029901

(56) Entgegenhaltungen:
- EP-A1- 1 184 311
- EP-A1- 2 216 279
- WO-A1-2010/128441
- DE-A1- 10 226 148
- JP-A- 5 246 592
- JP-A- 2004 043 072
- JP-A- 2004 256 268
- JP-A- 2008 156 424
- US-A- 4 259 399

## Beschreibung

Die Erfindung betrifft ein Verfahren zum Verbinden zweier Transferfolienbahnen, die eine thermoplastische Trägerfolie und eine Dekorlage umfassen.

Bei der Verarbeitung und Anwendung von Transferfolien und Laminierfolien müssen oftmals Folienabschnitte miteinander verbunden werden, um aus kürzeren Folienbahnen oder Streifen entsprechend längere "Lauflängen" zusammenzufügen.

Bestimmte Lauflängen ergeben sich sowohl aus Kundenanforderungen, zum Beispiel um mit Schnittrollen hoher Länge die Produktivität zu steigern, als auch aus der Forderung, den Ausschuss zu minimieren, weil Rüst- oder Standzeiten, insbesondere zum Rollenwechsel, verringert werden.

In der Folienherstellung und -verarbeitung ("Inhouse") besteht ebenfalls die Notwendigkeit, Folienbahnen miteinander zu verbinden, um die Produktivität zu erhöhen, den Ausschuss zu minimieren und um Rüstzeiten, Standzeiten und Anfahrprozesse zu verringern.

Das gängigste Verfahren ist das Verbinden, auch "Spleißen" genannt, mittels insbesondere manuell angebrachter Klebebänder. Hierbei werden die entsprechenden Folien mit handelsüblichen selbstklebenden Klebebändern zusammengeklebt. Die Verklebung erfolgt bei Laminier- oder Transferfolien (einseitig mit einer Transferlage beschichtete Folien) typischerweise auf der unbeschichteten Folienseite. Die Breite des Klebebandes ist typisch im Bereich von 2 bis 5 cm. Typische Dicken von Klebebändern liegen im Bereich von ca. 30 bis 130 µm.

Das Spleißen mit Klebeband hat sich in den letzten Jahren bewährt und bietet eine Reihe von Vorteilen. Das Verfahren ist kostengünstig, kann mit einer relativ hohen Passergenauigkeit der Folien zueinander erfolgen und der Spleiß, d. h. die Verbindungsstelle oder Verbindungsnaht, verfügt über hohe Festigkeiten, insbesondere Zugfestigkeit in Laufrichtung der Folien. Zudem kommen oftmals farbige Klebebänder zum Einsatz, um bestimmte Typen von Spleißen zu charakterisieren und optisch unterscheidbar zu machen.

Spleißen mittels Klebebändern zeigt jedoch eine Reihe von Nachteilen.

Beim Prägen von Einzelbildern sind diese Einzelbilder bzw. Motive, d. h. die Nutzen, in einem bestimmten Layout auf der Folie angeordnet, insbesondere in regelmäßigen Zeilen und Spuren. Dabei liegen die zu prägenden Nutzen in der Regel so nah zusammen, dass das Klebeband im Bereich der Prägezone liegt und dabei im Bereich der zu prägenden Nutzen, so dass diese überlappten Nutzen nicht prägbar sind und verloren gehen. Dies kann insbesondere zu Fehlprägungen und/oder zu Verschmutzungen der Prägestempel durch das Klebeband bzw. durch den am Rand austretenden Kleber des Klebebandes führen. Deshalb wird der Spleiß detektiert und ein Folienvorschub durchgeführt, wodurch ein Materialverlust eintritt und die Produktivität vermindert wird.

Beim Prägen von Einzelbildern auf parallelen Spuren besteht zusätzlich die Forderung, dass die Spleißstellen zum gleichen Zeitpunkt an der Prägeeinheit ankommen, da der Prägevorgang an allen Spuren unterbrochen werden muss bzw. alle Nutzen gleichzeitig übersprungen werden müssen und alle diese Nutzen verloren gehen. Liegen die Spleiße an unterschiedlichen Stellen in den Folien, so ist der Prägeprozess für längere Zeiten zu unterbrechen bzw. muss mehrmals wiederholt werden.

Beim Prägen von Einzelbildern mittels Mehrfachapplikation treten zusätzliche Probleme auf. Hier muss der Repeat der Einzelbilder, das heißt der Abstand der Einzelbilder zueinander, sehr genau stimmen. Aus diesem Grund können nur Folienstücke mit gleichem Repeat zusammen gespleißt werden.

Innerhalb von gespleißten Rollen kann es an der Spleißstelle - bedingt durch den höheren Druck - zu Kaltkleberaustritt am Rand des Spleißbandes oder zum "Verblocken" der Rollen, d. h. zum Verkleben von benachbarten Windungen auf der Rolle, kommen.

Der Einsatz von Klebeband-Spleißen erfordert einen höheren steuerungstechnischen Aufwand.

Die Verwendung von schmäleren Klebebändern mit einer Breite kleiner 1 cm ist in der Regel nicht möglich, da mit schmalen Klebebändern die erforderlichen Festigkeiten, insbesondere Zugfestigkeiten während der Verarbeitung, nicht sicher erreicht werden und sich die Spleißstelle auch durch Zugkräfte beim Wickeln bzw. innerhalb der Rolle öffnen kann.

Die DE 102 26 148 A1 betrifft eine Vorrichtung zum Verkleben zweier Bahnen aus Verpackungsmaterial für die Herstellung flüssigkeitsdichter Packungen, wobei jede Bahn zumindest einseitig mit einer flüssigkeitsdichten Kleberschicht abgedeckt ist.

Die JP 2004/256268 A beschreibt ein Verfahren zum Verbinden zweier Folienbahnen durch Wärmeeinwirkung, wobei die Folienbahnen als Verpackungsmaterial dienen.

Die EP 1 184 311 A1 betrifft ein Verfahren zum Spleißen eines Laminats für die Verpackung von gießbaren Lebensmitteln.

Die EP 2 216 279 A1 beschreibt ein Verfahren zum Verbinden von Folienbahnen aus einem Laminat auf Stoß.

Die US 4 259 399 A betrifft ein Verfahren zur Herstellung eines leichten Vliesstoffgewebes aus einem Bündel von zufälligen, losen, ultraschallverschmelzbaren Fasern.

Aufgabe der vorliegenden Erfindung ist es, ein verbessertes Verfahren und eine verbesserte Vorrichtung anzugeben, die die genannten Nachteile vermeiden.

Erfindungsgemäß wird diese Aufgabe mit einem Verfahren zum Verbinden einer ersten und einer zweiten Folienbahn einer Transferfolie gelöst, wobei die Folienbahnen eine thermoplastische Trägerfolie und eine Dekorlage umfassen, wobei eine solche erste und zweite Folienbahn miteinander verbunden werden, die eine Trennschicht aufweisen, um das Ablösen der Dekorlage von der thermoplastischen Trägerfolie zu erleichtern, und wobei vorgesehen ist, dass zwischen der ersten und der zweiten Folienbahn ein gemeinsamer Verbindungsabschnitt ausgebildet wird, in dem die erste und die zweite Folienbahn durch ein Schweißverfahren derart miteinander verbunden werden, dass die erste und zweite Folienbahn durch eine Doppelnaht, gebildet aus zwei Schweißnähten, miteinander verbunden sind.

Überraschender Weise hat sich gezeigt, dass eine dauerhafte und belastbare Schweißverbindung eintritt, obwohl die zu verschweißenden Folienbahnen als Mehrschichtkörper ausgebildet sind, die neben der verschweißbaren thermoplastischen Trägerfolie weitere Schichten umfassen, die die Festigkeit der Schweißverbindung herabsetzen können oder diese verhindern können.

Zudem weisen die Folien nach dem Schweißen eine sehr gute Planlage ohne nachteilige Verdickungsstelle durch ein zusätzliches Klebeband im Bereich der Naht auf und zeigen praktisch keine Dimensionsänderungen, insbesondere ein- oder zweidimensionale Verzüge, was zum Beispiel für Folgeprozesse wie Schneid- und Konfektionierungsprozesse von großer Bedeutung ist.

Bei den Transferfolien handelt es sich um Folien, deren Dekorlage durch ein Prägewerkzeug mittels Druck und/oder Temperatur auf ein zu dekorierendes Substrat übertragen wird. Die Basis der Transferfolie bildet eine Trägerfolie aus einem thermoplastischen Kunststoff, auf der eine ablösbare Dekorlage angeordnet ist.

Die Dekorlage kann neben einer oder mehreren, das Dekor tragenden Dekorschichten weitere Schichten umfassen, beispielsweise eine Kleberschicht und eine Aktivierungsschicht für die Kleberschicht.

Die eine Dekorschicht oder die mehreren Dekorschichten können beispielsweise jeweils als eine optional eingefärbte, transparente, transluzente oder opake Lackschicht, als eine fluoreszierende oder phosphoreszierende Lackschicht, als eine optisch variable Schicht und/oder als eine metallische oder nichtmetallische Reflexionsschicht ausgebildet sein. So kann eine Dekorschicht als eine pigmentierte Lackschicht ausgebildet sein, so dass Farbwirkungen ausbildbar sind und Bilder sowie alphanumerische Zeichen oder Symbole darstellbar sind. Die Dekorschicht kann eine funktionale Schicht, beispielsweise eine Magnetschicht, eine Photopolymerschicht oder eine Schicht aus leitenden, halbleitenden oder nichtleitenden Polymeren sein. Folien mit derartigen Dekorschichten können im Bereich von Magnetfolien, zum Fälschungsschutz von Banknoten und Dokumenten, für Außenanwendungen, zum Beispiel Chromfolien für Nummernschilder oder andere Dekore, im Bereich der IMD- oder IML-Technologie (IMD = In Mould Decoration; IML = In Mould-Labeling), für Antennenanwendungen sowie für Label unterschiedlichster Anwendungen zum Einsatz kommen. Zudem sind Kombinationen der genannten Dekorschichten ausführbar, wobei in einer Dekorschicht unterschiedliche Schichten direkt oder indirekt nebeneinander vorliegen. Die Schichtdicke einer solchen Dekorschicht beträgt vorzugsweise zwischen 1 µm und 25 µm, weiter bevorzugt zwischen 1 µm und 5 µm. Eine optisch variable Schicht kann von einer Replizierlackschicht mit einem abgeformten, diffraktiv und/oder refraktiv wirkenden Oberflächenrelief, einer Hologrammschicht, einer Volumenhologrammschicht, einem Dünnfilmschichtsystem, welches Farbwechseleffekte mittels Interferenz erzeugt, einer Flüssigkristallschicht oder einer Pigmente enthaltenden Schicht gebildet sein, beispielsweise optisch variable Interferenzschichtpigmente oder optisch variable Flüssigkristallpigmente oder Metall- oder Metalloxidpigmente. Als Oberflächenrelief kann beispielsweise eine refraktiv wirkende Makrostruktur, beispielsweise eine Linsenstruktur, ein diffraktives Beugungsgitter oder ein Hologramm abgeformt sein, welches vorzugsweise mit einer Reflektionsschicht belegt ist. Zur Unterstützung der optischen Effekte können metallische Schichten vorgesehen sein, die einfallendes Licht zurückwerfen. Die Dekorschichten können bereichsweise unterschiedlich ausgebildet sein und beliebig miteinander kombiniert sein, so dass beispielsweise OVD-Bereiche (Optically Variable Device) und Bildbereiche nebeneinander oder überlagernd dargestellt sind.

Bei Laminierfolien ist eine Trennung der Dekorlage von der Trägerfolie nicht vorgesehen. Zwischen der Dekorlage und der Trägerfolie kann daher eine Haftvermittlerschicht vorgesehen sein. Die Dekorlage kann neben einer oder mehreren Dekorschichten weiter eine Kleberschicht umfassen. Es kann sich dabei um eine Heißkleberschicht oder eine Kaltkleberschicht handeln. Die Dekorschichten können wie die Dekorschichten der Transferfolie ausgebildet sein.

Die einzelnen Schichten des Folienaufbaus können aus thermoplastischem Material, duroplastischem Material, zum Beispiel aus Lacken, die mittels UV-Strahlung vernetzt werden können, sowie aus Hybridmaterial (thermoplastisch, d. h. thermisch trocknend und gleichzeitig mit Strahlung vernetzbar) oder Kombinationen davon bestehen.

Die Schichtabfolgen können auch mehrfach vorliegen. Möglich ist auch, dass eine Dekorlage aus funktionalen und/oder dekorativen Schichten auf beiden Seiten der Trägerfolie vorliegt.

Insbesondere von den Trennschichten, bei denen es sich vorzugsweise um Wachstrennschichten handelt, welche bei Aktivierung mittels Wärme beim Heißprägen erweicht werden und dadurch ihre Trennfunktion erfüllen, und von den Metallisierungsschichten war zu erwarten, dass sie die Festigkeit der Schweißverbindung so stark herabsetzen, dass eine sichere Verbindung zweier Folienbahnen nicht möglich ist.

Mit dem erfindungsgemäßen Verfahren und der erfindungsgemäßen Vorrichtung können überraschenderweise dennoch Folien mit hoher Genauigkeit durch eine Schweißverbindung gespleißt werden, wobei ein Verbindungsabschnitt ausgebildet wird, der im Rolle-zu-Rolle-Prozess zu keiner Produktionsstörung führt.

Es kann vorgesehen sein, dass der gemeinsame Verbindungsabschnitt als ein Überlappungsstoß ausgebildet wird. Der Überlappungsstoß kann mit besonders geringer Breite ausgebildet werden, so dass auch Folien spleißbar sind, deren Motivabstand innerhalb des Layouts der Motive so gering ist, dass bei Verwendung von Spleißband die dem Verbindungsabschnitt benachbarten Motive nicht abprägbar wären.

Es kann auch vorgesehen sein, dass der gemeinsame Verbindungsabschnitt als ein Stumpfstoß, der von einer Spleißfolie überdeckt ist, ausgebildet wird. Bei der Spleißfolie handelt es sich allerdings nicht um ein Klebeband, so dass Verschmutzungen durch Austritt von Kleber nicht auftreten können. Die Spleißfolie kann auch eine geringere Dicke als ein Klebeband aufweisen, insbesondere eine Dicke von etwa 5 µm bis 20 µm aufweisen.

Es kann weiter vorgesehen sein, dass die erste und die zweite Folienbahn mittels Ultraschallschweißen miteinander verbunden werden.

In einer weiteren Ausführung kann vorgesehen sein, dass die erste und die zweite Folienbahn mittels Kontaktschweißen miteinander verbunden werden. Beim Kontaktschweißen werden erhitzte Abschnitte des Schweißkopfes mit dem Verbindungsabschnitt in thermischen Kontakt gebracht, so dass ein lokales Aufschmelzen der beiden Folienbahnen erfolgt, die dadurch miteinander verschweißt werden.

Es kann vorgesehen sein, dass zur Ausbildung einer Schweißnaht ein erhitztes Band oder ein erhitzter Draht verwendet wird.

Weiter kann vorgesehen sein, dass die erste und die zweite Folienbahn mittels Laserschweißen miteinander verbunden werden. Es kann vorgesehen sein, einen Laser längs der Schweißnaht zu bewegen und/oder das Laserlicht optisch so abzulenken, dass es eine Linie ausbildet.

Es kann vorgehen sein, dass in dem Verbindungsabschnitt unter der ersten und der zweiten Folienbahn eine Absorptionsschicht für Laserlicht angeordnet wird. Die Absorptionsschicht wandelt das Laserlicht in Wärme um. Dadurch ist es insbesondere möglich, geringere Laserleistungen zu verwenden. Durch die Absorptionsschicht ist es außerdem möglich, die auf die Schweißstelle einwirkende Energie auch rückseitig in die Schweißstelle einzutragen, d.h. von der dem Laserlicht abgewandten Seite. Die Absorptionsschicht kann als oberste Schicht oder unter einer anderen Schicht innerhalb einer mehrschichtigen Dekorlage angeordnet sein. Möglich ist auch der Einsatz mehrerer Absorptionsschichten, ggf. an unterschiedlichen Positionen innerhalb der Dekorlage und mit ggf. unterschiedlicher Absorptionscharakteristik für Laserlicht.

In einer vorteilhaften Ausbildung kann vorgesehen sein, dass als Absorptionsschicht eine das Laserlicht absorbierende Spleißfolie verwendet wird. Bei der Spleißfolie handelt es sich allerdings nicht um ein Klebeband, so dass Verschmutzungen durch Austritt von Kleber nicht auftreten können. Vorteilhafterweise kann es sich um eine eingefärbte Folie aus dem Material der Trägerfolie handeln.

Die Schnittkanten der Folien können geradlinig ausgebildet sein. Möglich ist auch der Einsatz von wellenförmig geschnittenen, perforierten, gezackten Kanten usw.

Es kann vorgesehen sein, dass eine kontinuierliche Schweißnaht ausgebildet wird. In der einfachsten Form kann es sich um eine geradlinige kontinuierliche Einfach- oder Mehrfachnaht handeln. Die kontinuierliche Schweißnaht kann auch wellenförmig, gezackt oder mäanderförmig ausgebildet sein. Der Schweißkopf, beispielsweise der Kontaktschweißkopf, der Laserstrahl oder die Sonotrode, kann der genannten Nahtkontur entsprechend über die Folienoberfläche bewegt werden oder es kann ein entsprechend ausgeformter Schweißdraht vorgesehen sein.

Es kann auch vorgesehen sein, dass eine diskontinuierliche Schweißnaht ausgebildet wird. So können insbesondere gestrichelte oder gepunktete Schweißnähte ausgebildet werden, indem beispielsweise der Laserstrahl ein- und ausgeschaltet wird, der Kontaktschweißkopf oder die Sonotrode ein- und ausgeschaltet oder von der Folienoberfläche abgehoben und wieder aufgesetzt wird.

Weiter kann vorgesehen sein, dass eine Schweißnaht in oszillierender Form ausgebildet wird. Bei einer oszillierenden Schweißnaht kann die Lage der Schweißnaht und/oder die Breite der Schweißnaht variiert sein. Es kann beispielsweise der Fokus des Laserstrahls verändert werden. Weiter kann vorgesehen sein, Kontaktschweißköpfe oder Sonotroden mit länglichem Querschnitt, beispielsweise rechteckförmigem oder elliptischen Querschnitt zu verwenden und diese um ihre Längsachse zu drehen oder zu schwenken. Die Breite der Schweißnaht kann bei dieser Ausbildung variiert werden, indem durch die Drehlage des Schweißkopfes unterschiedlich effektive Breiten des Schweißkopfes eingestellt werden. Die effektive Breite des Schweißkopfes variiert so zwischen der Abmessung der Schmalseite des Rechtecks oder der Ellipse und der Abmessung der Breitseite des Rechtecks oder der Ellipse.

In einer weiteren vorteilhaften Ausbildung kann vorgesehen sein, dass die Dekorlage vor dem Schweißprozess im Bereich der Schweißnaht entfernt wird. Das Entfernen der Dekorlage kann durch in Kontakt bringen mit einem selbstklebenden Klebeband mit nachfolgendem Abziehen der Dekorlagen oder durch vorgängiges Transferieren auf eine Unterlage mittels eines zum Beispiel 3 mm breiten beheizten Prägerades erfolgen.

Möglich ist auch die vorgängige Modifikation, insbesondere Ablation oder thermische Zerstörung, der Dekorlage mittels Lasereinwirkung.

Weiter kann vorgesehen sein, dass die erste und die zweite Folienbahn so zueinander ausgerichtet werden, dass die auf der ersten Folienbahn angeordneten Motive und/oder Passmarken zu den auf der zweiten Folienbahn angeordneten Motive und/oder Passmarken im Verbindungsabschnitt im Register mit einer Lagetoleranz kleiner als +/-0,5 mm ausgerichtet sind. Wenn die Motive klare Konturen aufweisen, beispielsweise scharfe Kanten und/oder Konturen, können Passmarken entbehrlich sein.

Die Erfindung wird nun anhand von Ausführungsbeispielen näher erläutert. Es zeigen
- Fig. 1a: ein nicht erfindungsgemäßes erstes Ausführungsbeispiel einer Vorrichtung zum Verbinden zweier Transfer- oder Laminierfolienbahnen in schematischer Seitenansicht;
- Fig. 1b: die Vorrichtung in Fig. 1a in schematischer Draufsicht;
- Fig. 2a: die miteinander verbundenen Folienbahnen in Fig. 1a in schematischer perspektivischer Darstellung;
- Fig. 2b: die miteinander verbundenen Folienbahnen in Fig. 1a in schematischer Schnittdarstellung;
- Fig. 3: ein nicht erfindungsgemäßes zweites Ausführungsbeispiel einer Vorrichtung zum Verbinden zweier Transfer- oder Laminierfolienbahnen in schematischer perspektivischer Darstellung;
- Fig.4a: ein nicht erfindungsgemäßes drittes Ausführungsbeispiel einer Vorrichtung zum Verbinden zweier Transfer- oder Laminierfolienbahnen in schematischer Schnittdarstellung;
- Fig. 4b: die miteinander verbundenen Folienabbahnen in Fig. 4a in schematischer Schnittdarstellung;
- Fig. 5a: eine erste Vorbereitungsstufe der Folienendabschnitte für ein in Fig. 5c gezeigtes viertes Ausführungsbeispiel einer nicht erfindungsgemäßen Vorrichtung zum Verbinden zweier Transfer- oder Laminierfolienbahnen in schematischer Schnittdarstellung;
- Fig. 5b: eine zweite Vorbereitungsstufe der Folienendabschnitte in Fig. 5a;
- Fig. 5c: ein nicht erfindungsgemäßes viertes Ausführungsbeispiel einer Vorrichtung zum Verbinden zweier Transfer- oder Laminierfolienbahnen in schematischer Schnittdarstellung;
- Fig. 5d: die miteinander verbundenen Folienbahnen in Fig. 5c in schematischer Schnittdarstellung;
- Fig. 6a: ein nicht erfindungsgemäßes fünftes Ausführungsbeispiel einer Vorrichtung zum Verbinden zweier Transfer- oder Laminierfolienbahnen in schematischer Schnittdarstellung;
- Fig. 6b: die miteinander verbundenen Folienbahnen in Fig. 6a in schematischer Schnittdarstellung;
- Fig. 7a: ein nicht erfindungsgemäßes sechstes Ausführungsbeispiel einer Vorrichtung zum Verbinden zweier Transfer- oder Laminierfolienbahnen in schematischer Schnittdarstellung;
- Fig. 7b: die miteinander verbundenen Folienbahnen in Fig. 7a in schematischer Schnittdarstellung;
- Fig. 8: die miteinander verschweißten Folienendabschnitte im Schichtaufbau in einer schematischen Schnittdarstellung;
- Fig.9a: ein Schnittbild einer Folienschweißverbindung in 10facher Vergrößerung;
- Fig. 9b: ein Schnittbild einer Folienschweißverbindung in 20facher Vergrößerung.

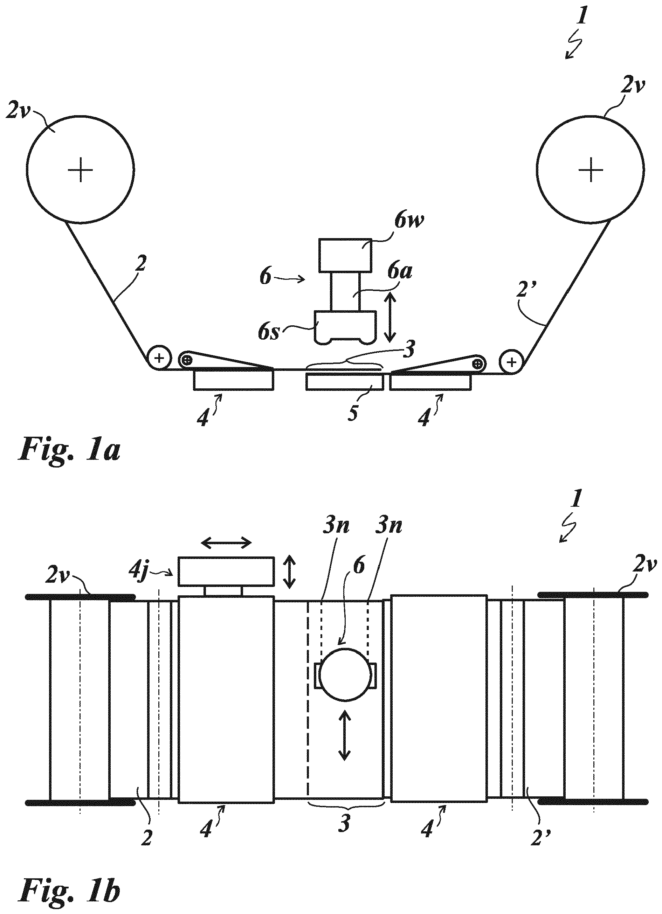

Fig. 1a und 1b zeigen eine nicht erfindungsgemäße Vorrichtung 1 zum Verbinden bzw. Spleißen zweier Transfer- oder Laminierfolienbahnen 2 und 2' mittels Ultraschallschweißen in schematischer Darstellung. In dem in Fig. 1a und 1b gezeigten Ausführungsbeispiel handelt es sich bei den Folien um als Heißprägefolie ausgebildete Transferfolien.

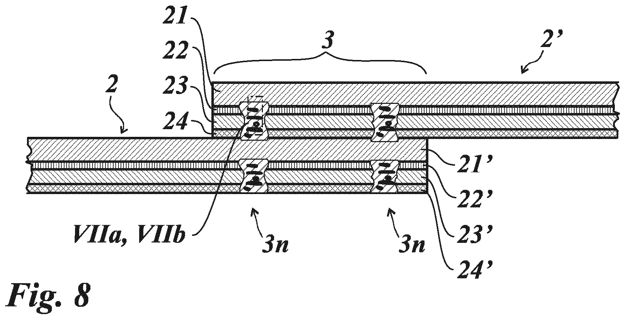

Die bandförmigen Folienbahnen 2 und 2' sind auf Vorratsrollen 2v bereitgestellt und Aufnahmevorrichtungen 4 und 4' zugeführt, welche die Endabschnitte der Folienbahnen fixieren. Die Folienbahnen liegen als Folienwickel vor, die in der Vorrichtung 1 zu größeren Folienwickeln verbunden werden. Bei den Folien handelt es sich um Mehrschichtkörper, die eine thermoplastische Trägerfolie und eine von der Trägerfolie abziehbare, als Übertragungslage ausgebildete Dekorlage umfassen. Die Folien weisen eine zwischen der Trägerfolie und der Übertragungslage angeordnete Trennschicht auf, die das Ablösen der Übertragungslage von der Trägerfolie erleichtert. Weiter können Reflexionsschichten und Schutzschichten vorgesehen sein, wie weiter unten in Fig. 8 beschrieben.

Die Aufnahmevorrichtung 4 ist mit einer Justiereinrichtung 4j bewegungsstarr verbunden. Mittels der Justiereinrichtung 4j ist die Aufnahmevorrichtung 4 in x- und y-Richtung verstellbar, wodurch die beiden Folienbahnen 2 und 2' zueinander lagejustierbar sind. Mit der Justiereinrichtung 4j können die zwei Folienbahnen 2 und 2' so zueinander ausgerichtet werden, dass die auf der ersten Folienbahn 2 angeordneten Motive und/oder Passmarken zu den auf der zweiten Folienbahn 2' angeordneten Motive und/oder Passmarken im Register mit einer Lagetoleranz kleiner als +/-0,5 mm ausgerichtet sind und dabei einen Überlappungsstoß 3 bilden, in dem sie übereinander angeordnet sind. Die Folienbahnen 2 und 2' liegen im Überlappungsstoß 3 auf einem Amboss 5 auf, der unter einem Ultraschallschweißkopf 6 angeordnet ist. Der Ultraschallschweißkopf 6 umfasst einen Ultraschallwandler 6w, ein Amplitudentransformationsstück 6a und eine Sonotrode 6s.

Zu dem Ultraschallwandler 6w wird ein hochfrequenter Wechselstrom übertragen, aus dem mit Hilfe des piezoelektrischen oder des magnetostriktiven Effekts eine mechanische Ultraschallschwingung erzeugt wird. Die Ultraschallschwingung wird über das Amplitudentransformationsstück 6a auf die Sonotrode 6s übertragen. Durch die Form und Masse des Amplitudentransformationsstückes 6a werden die Amplitude der Ultraschallschwingung und die Impedanzanpassung beeinflusst. Die Sonotrode 6s kann aus Stahl, Aluminium oder Titan hergestellt sein.

Die Sonotrode 6s weist in dem in Fig. 1a und 1b dargestellten Ausführungsbeispiel zwei voneinander beabstandete Spitzen auf. Die zwei Spitzen der Sonotrode 6s kommen durch Absenken des Ultraschallschweißkopfes 6 mit der im Überlappungsstoß 3 obenauf liegenden Folienbahn 2 in Anlage und übertragen die Ultraschallschwingungen auf das Folienmaterial. Dabei bildet der Amboss 5 ein Gegenlager für die Sonotrode 6s. Die Ultraschallschwingungen werden so unter Druck auf die zu verbindenden Folienbahnen 2 und 2' übertragen, die in dem Überlappungsstoß 3 auf dem Amboss 5 übereinander angeordnet sind. Die mit der Sonotrode 6s in Kontakt stehenden Bereiche der Folienbahnen 2 und 2' erhitzen sich wegen der durch den Ultraschall hervorgerufenen inneren Reibung und verschmelzen miteinander.

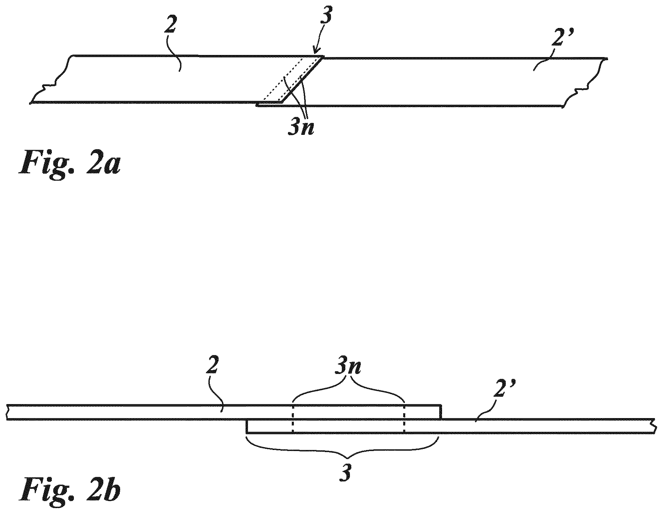

Der abgesenkte Ultraschallschweißkopf 6 ist quer zu der Längsachse der Folienbahnen 2 und 2' verfahrbar, so dass wegen der zwei Spitzen der Sonotrode 6s eine Doppelnaht aus zwei parallelen Schweißnähten 3n herstellbar ist (siehe Fig. 2a und 2b), die über die gesamte Breite der Folienbahnen 2 und 2' erstreckt sind.

Überraschender Weise hat sich gezeigt, dass eine dauerhafte und belastbare Schweißverbindung eintritt, obwohl zwischen den beiden Trägerfolien im Überlappungsstoß 3 die besagten weiteren Schichten angeordnet sind, so dass die beiden Trägerfolien nicht im direkten Kontakt stehen. Es war zu erwarten, dass insbesondere Wachs auch beim Ultraschallschweißen durch Aufschmelzen durch den Energieeintrag als Trennmittel wirkt und eine haltbare Verschweißung verhindert. Weiter unten in Fig. 8 wird ein möglicher Wirkungsmechanismus beschrieben, der zu der belastbaren Schweißverbindung führt.

Fig. 2a und 2b zeigen die miteinander verbundenen Folienbahnen in Fig. 1 in schematischer perspektivischer Darstellung bzw. in schematischer Schnittdarstellung. Die Folienbahnen 2 und 2' sind durch eine Doppelnaht, gebildet aus zwei Schweißnähten 3n, miteinander verbunden.

Alternativ zu der Doppelnaht aus zwei geradlinigen parallelen Einzelnähten sind auch andere Doppelnähte ausführbar, wenn der Ultraschallschweißkopf 6 um seine Längsachse (z-Achse, entsprechend der Absenkrichtung) drehbar ist. Dadurch können auch die zwei Spitzen der Sonotrode 6s so während des geradlinigen Verfahrens des Ultraschallschweißkopfes 6 quer zur Längsachse bzw. Laufrichtung der Folienbahnen 2, 2' so verdreht werden, dass eine oszillierende Doppelnaht aus zwei parallelen, nicht geradlinigen Einzelnähten entsteht. Je nach Größe der Verfahr- und Drehgeschwindigkeit lässt sich die resultierende, insbesondere komplexe Form, insbesondere auch die Dichte der sich kreuzenden Verbindungsnähte, d. h. deren jeweiliger Abstand zueinander, steuern. Die oszillierende Doppelnaht kann insbesondere ähnlich einer Guilloche geformt sein. Eine solche dicht an dicht angeordnete Doppelnaht kann eine erhöhte Festigkeit, insbesondere gegen Zugkräfte bei der Verarbeitung und/oder dem Aufrollen der Folienbahnen 2, 2' aufweisen. Es ist ebenso möglich, die Sonotrode mit mehr als zwei Spitzen auszurüsten, sodass entweder geradlinig parallele Mehrfachnähte entstehen oder wie oben beschrieben, entsprechend noch komplexere, nicht geradlinige Mehrfachnähte. Es ist ebenso möglich, die Mehrfachnähte mit den vorher beschriebenen Breitenvariationen der Naht und/oder Naht-Unterbrechungen zu kombinieren.

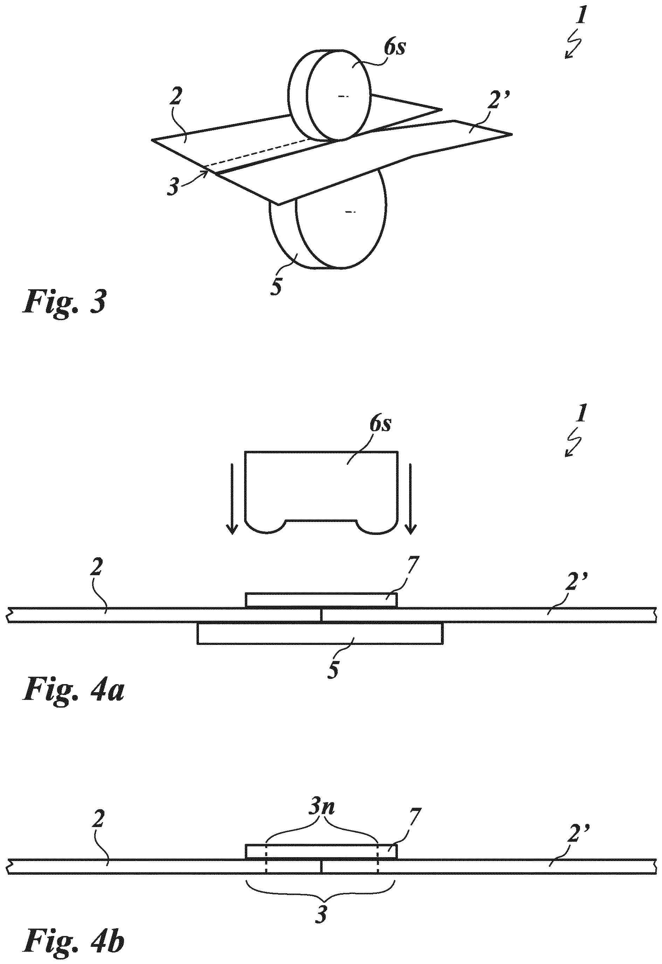

Die Fig. 3 zeigt ein zweites Ausführungsbeispiel der Vorrichtung 1, bei dem die Sonotrode 6s als eine Rollsonotrode und der Amboss 5 als ein Rollamboss ausgebildet sind. Die Darstellung der Vorrichtung in Fig. 3, die im Wesentlichen wie die Vorrichtung in Fig. 1 ausgebildet ist, ist zur Vereinfachung der Darstellung auf die Sonotrode und den Amboss beschränkt.

Die Fig. 4a zeigt einen schematischen Ausschnitt eines dritten Ausführungsbeispiels der Vorrichtung 1, die im Wesentlichen wie die Vorrichtung in Fig. 1 ausgebildet ist. Die beiden Folienbahnen 2 und 2' stoßen unter Ausbildung eines Stumpfstoßes aneinander und sind im Verbindungsabschnitt von einem Spleiß 7 überdeckt. Der Spleiß 7 kann wie die Trägerfolie der beiden Folienbahnen aus einem thermoplastischen Kunststoffmaterial bestehen. Er kann der Vorrichtung 1 beispielsweise als ein Band zugeführt werden, das nach dem Schweißen auf die Breite der Folienbahnen zugeschnitten wird. Wie in Fig. 4b gezeigt, kann eine Doppelnaht vorgesehen sein, die aus zwei Schweißnähten 3n gebildet ist. Der Vorteil dieses Ausführungsbeispiels besteht darin, dass die beiden Schweißnähte 3n unmittelbar zwischen den miteinander verschweißbaren thermoplastischen Kunststoffmaterialien ausgebildet sind, so dass die Schweißnähte mit optimaler Zugfestigkeit ausgebildet sind.

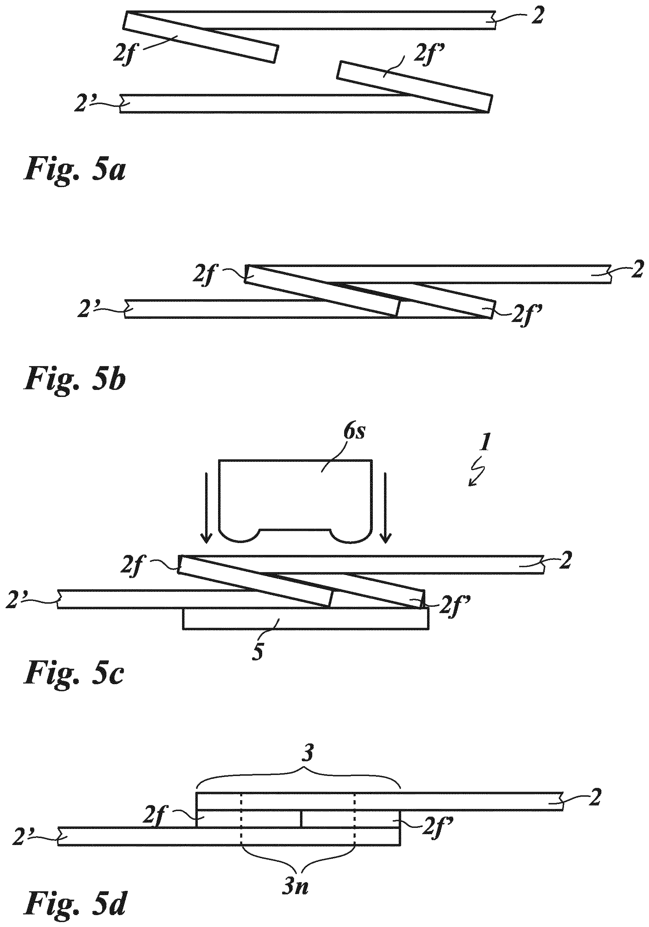

Die Fig. 5a bis 5d zeigen eine Ausbildung, bei der die Endabschnitte der Folienbahnen 2 und 2' jeweils um 90° umgebogen oder gefaltet werden und so einen Faltabschnitt 2f bzw. 2f bilden. Dadurch entsteht in einer der Schweißnähte 3n eine erhöhte Festigkeit, weil durch das Umfalten im Faltabschnitt die Trägerfolien der beiden Folienbahnen aufeinander liegen und die Trägerfolien entgegen der Richtung einer späteren Zugbelastung ineinander greifen bzw. miteinander verzahnen.

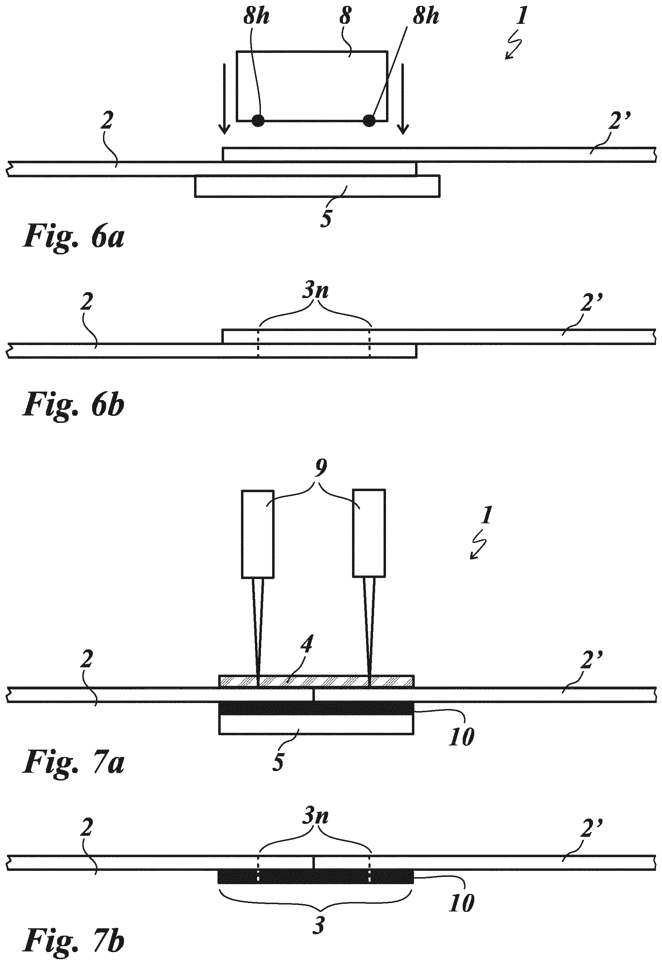

Die Fig. 6a und 6b zeigen ein weiteres Ausführungsbeispiel, bei dem als Verbindungsverfahren Kontaktschweißen vorgesehen ist. Anstelle des Ultraschallschweißkopfes in Fig. 1 ist ein Kontaktschweißkopf 8 vorgesehen, der an seiner dem Überlappungsstoß zugewandten Unterseite zwei voneinander beabstandete draht- oder bandförmige Heizelemente 8h aufweist, die beim Absenken des Kontaktschweißkopfes 8 auf die zu verbindenden Folienbahnen 2 und 2' zwei Schweißnähte 3n durch lokales thermisches Aufschmelzen der Trägerfolien ausbilden. Auch dabei bilden sich in den Schweißnähten Mischschichten heraus, wie weiter unten in Fig. 8 beschrieben.

Die Fig. 7a und 7b zeigen ein weiteres Ausführungsbeispiel, bei dem die Folienbahnen 2 und 2' durch Laserschweißen miteinander verbunden werden. In dem Ausführungsbeispiel sind zwei voneinander beabstandete Laserschweißköpfe 9 vorgesehen, die eine linienförmige Erwärmung der zu verbindenden Folienbahnen 2 und 2' ermöglichen. Dazu können die Laserschweißköpfe 9 längs der Nahtachse verschiebbar ausgebildet sein, oder es können nicht verschiebbare Laserschweißköpfe mit einer optischen Strahlablenkung vorgesehen sein. Die den Laserschweißköpfen 9 zugewandte Oberseite der Aufnahmevorrichtung ist für die verwendete Laserstrahlung durchsichtig ausgebildet. Die beiden Folienbahnen 2 und 2' bilden einen Stumpfstoß aus, unter dem eine als schwarze Spleißfolie ausgebildete Absorptionsschicht 10 für die Laserstrahlung angeordnet ist. Unter der Spleißfolie ist der Amboss 5 angeordnet. Die beiden Folienbahnen 2 und 2' sind vorteilhafterweise so ausgerichtet, dass die Trägerfolie auf der Spleißfolie aufliegt.

Ist der Kontaktschweißkopf 8 mit zwei oder mehr Heizelementen 8h oder der Laserschweißkopf 9 mit zwei oder mehr Laserstrahlen ausgerüstet, so ist auch damit durch Verdrehung des Kontaktschweißkopfes 8 um seine Längsachse oder im Falle des Laserschweißkopfes 9 durch Verdrehung des Laserschweißkopfes 9 um seine Längsachse oder durch entsprechende Verstellung der optischen Strahlablenkung die Erzeugung komplexer, insbesondere oszillierender Mehrfachnähte mit erhöhter Festigkeit herstellbar. Es ist auch hier möglich, die Mehrfachnähte mit den vorher beschriebenen Breitenvariationen der Naht und/oder Naht-Unterbrechungen zu kombinieren.

Die Fig. 8 zeigt anhand einer schematischen Schnittdarstellung den Schichtaufbau zweier miteinander verschweißter Folienbahnen 2 und 2' sowie die Ausbildung der Schweißnähte 3n im Einzelnen.

Die beiden Folienbahnen 2 und 2' sind als Mehrschichtkörper ausgebildet. Auf einer Trägerfolie 21, die beispielsweise aus Polyester, insbesondere PET (PET = Polyethylenterephthalat) ausgebildet sein kann, ist eine wachsartige Trennschicht 22, eine Übertragungslage 23 und eine insbesondere metallische Reflexionsschicht 24 angeordnet. Die Reflexionsschicht kann beispielsweise aus Metallen wie Aluminium, Kupfer, Chrom oder aus HRI-Schichten (HRI = high refractive index) wie z. B. ZnS oder TiO₂ oder aus einem Mehrschichtsystem vollflächig oder strukturiert, z. B. durch partielle Metallisierung oder Demetallisierung ausgebildet sein. Kombinationen davon sind ebenfalls möglich. Als weitere Schicht kann beispielsweise eine Kleberschicht vorgesehen sein.

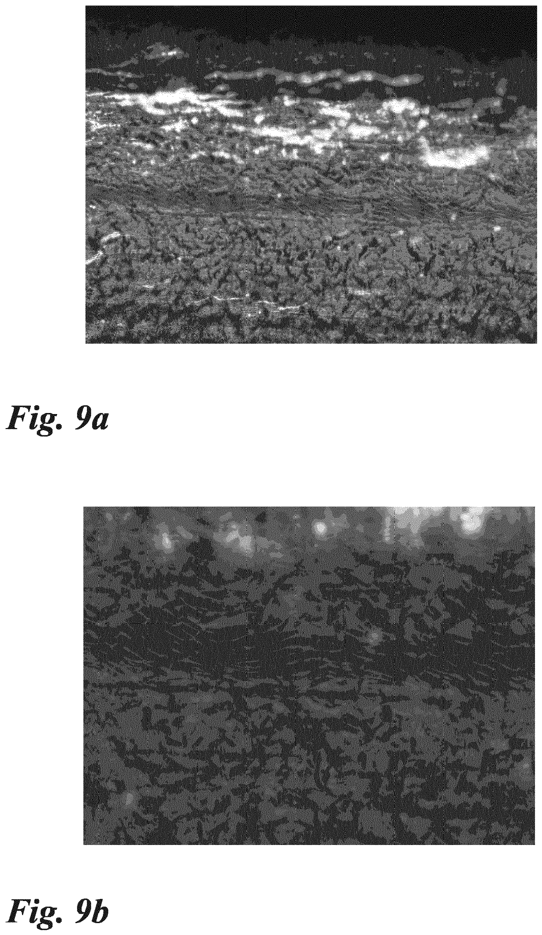

Wie Untersuchungen gezeigt haben, sind in den Schweißnähten 3n Mischstrukturen ausgebildet, wobei die Trägerfolien 21 eine durchgehende Verbindungsschicht bilden, in der Cluster der übrigen Schichten eingelagert sind. Wie die Fig. 9a und 9b zeigen, ist eine Durchmischung des Schichtpakets eingetreten. Die Mischschicht ist zwar nicht so homogen wie die Trägerfolie, weist jedoch noch eine ausreichende Zugfestigkeit auf, um das Abprägen bzw. Aufkaschieren der Folie zu ermöglichen, wie weiter oben beschrieben.

Wie Versuche mit unterschiedlichen Schweißverfahren zeigten, wird zwar die Zugfestigkeit eines konventionellen Spleißes nicht erreicht, doch wird die an einen Spleiß zu stellende minimale Anforderung einer Zugfestigkeit größer 13 N/cm erreicht. Die Zugfestigkeit wurde jeweils mit einer Zwick-Prüfmaschine ermittelt.

Für eine Ultraschallschweißverbindung ergaben sich für Folien aus PET bei einer Nahtbreite von 0,8 mm in Abhängigkeit von der Materialdicke folgende Zugfestigkeiten:
- PET 19 µm: 21,5 N/cm
- PET 50 µm: 47,0 N/cm

Das Ausgangsmaterial weist bei einer Dicke von 19 µm eine Zugfestigkeit von 40 - 45 N/cm auf.

Herkömmliches, mit Kleber beschichtetes Spleißband weist eine Zugfestigkeit von 30 - 40 N/cm auf. Bei einem konventionellen Spleiß und einer PET-Folie von 19 µm Dicke wird eine Zugfestigkeit von 35 - 45 N/cm erreicht.

Der erfindungsgemäß geschweißte Spleiß des o. g. PET-Materials wies eine Zugfestigkeit von 15 - 25 N/cm auf, was für die Weiterverarbeitung der verbundenen Folienbahnen in einem Rolle-zu-Rolle-Verfahren ausreichend ist.

In einem weiteren Versuch wurde Folienbahnen einer Heißprägefolie durch Ultraschallschweißen mit einer Nahtbreite von 0,6 -1,0 mm verbunden, wobei die Zugfestigkeit pro Naht 12 - 19 N/cm betrug.

Mit einer Heißprägefolie mit pigmentiertem Kleber wurde bei gleicher Nahtbreite von 0,6 - 1,0 mm nur eine Zugfestigkeit von 3,0 N/cm pro Naht erreicht.

Weitere Versuche wurden durchgeführt, um den Einfluss der Nahtbreite und des Schweißverfahrens zu ermitteln:
- Ultraschallschweißen (pro 0,5 mm Naht): 4,1 N/cm
- Ultraschallschweißen (pro 1 mm Naht): 8,5 N/cm
- Impulsschweißen bzw. Kontaktschweißen (pro 1,6 mm Naht): 12,8 N/cm

Offensichtlich hat die Breite der Schweißnaht den entscheidenden Einfluss auf die Zugfestigkeit der Schweißnaht.

Es wurden folgende Anforderungen an die Nahtstelle der beiden Folienbahnen 2 und 2' gestellt:
Wie sich weiter zeigte, konnten folgende Ergebnisse beim Verbinden von Folienbahnen einer Heißprägefolie mit einer Gesamtdicke von etwa 19 µm erreicht werden:
- Herstellung einer Nahtstelle im Register mit +/-0,5 mm Toleranz;
- Breite der Nahtstelle maximal 3 mm;
- Auftragen der Nahtstelle, das heißt Dicke der Nahtstelle nicht größer als bei Ausbildung mit Spleißband;
- Haftung so gut, dass die Folie die in einer typischen Applikationsmaschine auftretenden Zugkräfte übersteht;
- Länge der Nahtstelle: im Bereich von 10 bis 650 mm.

### Bezugszeichenliste

- 1: Vorrichtung zum Verbinden von Folienbahnen
- 2, 2': Folienbahnen
- 2f, 2f: Faltabschnitt
- 2v: Vorratsrolle
- 3: Überlappungsstoß
- 3n: Schweißnaht
- 4, 4': Aufnahmevorrichtung
- 4j: Justiereinrichtung
- 5: Amboss
- 6: Ultraschallschweißkopf
- 6a: Amplitudentransformationsstück
- 6s: Sonotrode
- 6w: Ultraschallwandler
- 7: Spleißfolie
- 8: Kontaktschweißkopf
- 8h: Heizelement
- 9: Laserschweißkopf
- 10: Absorptionsschicht
- 21: Trägerfolie
- 22: Trennschicht
- 23: Übertragungslage
- 24: Metallisierung

## Patentansprüche

1. Verfahren zum Verbinden einer ersten und einer zweiten Folienbahn (2, 2') einer Transferfolie, wobei die Folienbahnen (2, 2') eine thermoplastische Trägerfolie (21) und eine Dekorlage (23) umfassen, wobei eine solche erste und zweite Folienbahn (2, 2') miteinander verbunden werden, die eine Trennschicht aufweisen, um das Ablösen der Dekorlage (23) von der thermoplastischen Trägerfolie (21) zu erleichtern, und wobei zwischen der ersten und der zweiten Folienbahn (2, 2') ein gemeinsamer Verbindungsabschnitt (3) ausgebildet wird, in dem die erste und die zweite Folienbahn (2, 2') durch ein Schweißverfahren derart miteinander verbunden werden, dass die erste und zweite Folienbahn (2, 2') durch eine Doppelnaht, gebildet aus zwei Schweißnähten (3n), miteinander verbunden sind.

2. Verfahren nach Anspruch 1,
**dadurch gekennzeichnet,**
**dass** der gemeinsame Verbindungsabschnitt als ein Überlappungsstoß (3) ausgebildet wird.

3. Verfahren nach Anspruch 1,
**dadurch gekennzeichnet,**
**dass** der gemeinsame Verbindungsabschnitt als ein Stumpfstoß, der von einer Spleißfolie überdeckt ist, ausgebildet wird.

4. Verfahren nach einem der vorangehenden Ansprüche,
**dadurch gekennzeichnet,**
**dass** die erste und die zweite Folienbahn (2, 2') mittels Ultraschallschweißen miteinander verbunden werden.

5. Verfahren nach einem der Ansprüche 1 bis 3,
**dadurch gekennzeichnet,**
**dass** die erste und die zweite Folienbahn (2, 2') mittels Kontaktschweißen miteinander verbunden werden, wobei bevorzugt zur Ausbildung einer Schweißnaht ein elektrisches Heizelement (8h) verwendet wird.

6. Verfahren nach einem der Ansprüche 1 bis 3,
**dadurch gekennzeichnet,**
**dass** die erste und die zweite Folienbahn (2, 2') mittels Laserschweißen miteinander verbunden werden, wobei bevorzugt in dem Verbindungsabschnitt unter der ersten und der zweiten Folienbahn (2, 2') eine Absorptionsschicht (10) für Laserlicht angeordnet wird, wobei besonders bevorzugt als Absorptionsschicht (10) eine das Laserlicht absorbierende Spleißfolie verwendet wird.

7. Verfahren nach einem der vorangehenden Ansprüche,
**dadurch gekennzeichnet,**
**dass** eine kontinuierliche Schweißnaht ausgebildet wird, die bevorzugt in oszillierender Form ausgebildet wird.

8. Verfahren nach einem der Ansprüche 1 bis 6,
**dadurch gekennzeichnet,**
**dass** eine diskontinuierliche Schweißnaht ausgebildet wird, die bevorzugt in oszillierender Form ausgebildet wird.

9. Verfahren nach einem der vorangehenden Ansprüche,
**dadurch gekennzeichnet,**
**dass** die erste und die zweite Folienbahn (2, 2') so zueinander ausgerichtet werden, dass die auf der ersten Folienbahn (2) angeordneten Motive und/oder Passmarken zu den auf der zweiten Folienbahn (2') angeordneten Motive und/oder Passmarken im Verbindungsabschnitt (3) im Register mit einer Lagetoleranz besser als +/-0,5 mm ausgerichtet sind.

10. Verfahren nach einem der vorangehenden Ansprüche,
**dadurch gekennzeichnet,**
**dass** vor dem Ausbilden der Schweißnaht im Bereich der Schweißnaht die Dekorlage (23) lokal entfernt wird.

11. Verfahren nach einem der vorangehenden Ansprüche,
**dadurch gekennzeichnet,**
**dass** eine solche erste und zweite Folienbahn (2, 2') miteinander verbunden werden, die eine Kleberschicht aufweisen.

## Claims

1. Method for connecting a first and a second film web (2, 2') of a transfer film, wherein the film webs (2, 2') comprise a thermoplastic carrier film (21) and a decorative sheet (23), wherein such a first and second film web (2, 2') are connected to each other, which have a separating layer in order to facilitate the detachment of the decorative sheet (23) from the thermoplastic carrier film (21), and wherein a common connecting portion (3) is formed between the first and the second film web (2, 2'), in which the first and the second film web (2, 2') are connected to each other by a welding process in such a way that the first and second film web (2, 2') are connected to each other by a double seam, formed of two welding seams (3n).

2. Method according to claim 1,
**characterised in that**
the common connecting portion is formed as a lap joint (3).

3. Method according to claim 1,
**characterised in that**
the common connecting portion is formed as a butt joint which is covered by a splice film.

4. Method according to one of the preceding claims,
**characterised in that**
the first and the second film web (2, 2') are connected to each other by means of ultrasonic welding.

5. Method according to one of claims 1 to 3,
**characterised in that**
the first and the second film web (2, 2') are connected to each other by means of contact welding, wherein an electrical heating element (8h) is preferably used for forming a weld seam.

6. Method according to one of claims 1 to 3,
**characterised in that**
the first and the second film web (2, 2') are connected to each other by means of laser-welding, wherein an absorption layer (10) for laser light is preferably arranged in the connecting portion below the first and the second film web (2, 2'), wherein, particularly preferably, a splice film absorbing the laser light is used as the absorption layer (10).

7. Method according to one of the preceding claims,
**characterised in that**
a continuous welding seam is formed which is preferably formed in an oscillating shape.

8. Method according to one of claims 1 to 6,
**characterised in that**
a discontinuous welding seam is formed which is preferably formed in an oscillating shape.

9. Method according to one of the preceding claims,
**characterised in that**
the first and the second film web (2, 2') are oriented with respect to each other such that the motifs arranged on the first film web (2) and/or registration marks for the motifs arranged on the second film web (2') and/or registration marks in the connecting portion (3) are oriented in register with a positional tolerance of better than +/-0.5 mm.

10. Method according to one of the preceding claims,
**characterised in that**
the decorative sheet (23) is locally removed in the region of the welding seam before the formation of the welding seam.

11. Method according to one of the preceding claims,
**characterised in that**
such a first and second film web (2, 2'), which have an adhesive layer, are connected to each other.

## Revendications

1. Procédé servant à relier une première et une deuxième bande de film (2, 2') d'un film de transfert, dans lequel les bandes de film (2, 2') comprennent un film de support (21) thermoplastique et une strate décorative (23), dans lequel une première et une deuxième bande de film (2, 2') de ce type sont reliées entre elles, qui présentent une couche de séparation afin de faciliter le décollement de la strate décorative (23) du film de support (21) thermoplastique, et dans lequel une section de liaison (3) commune est réalisée entre la première et la deuxième bande de film (2, 2'), dans laquelle la première et la deuxième bande de film (2, 2') sont reliées l'une à l'autre de telle manière par un procédé de soudage que la première et la deuxième bande de film (2, 2') sont reliées entre elles par un double cordon formé à partir de deux cordons de soudure (3n).

2. Procédé selon la revendication 1,
**caractérisé en ce**
**que** la section de liaison commune est réalisée sous la forme d'un joint de chevauchement (3).

3. Procédé selon la revendication 1,
**caractérisé en ce**
**que** la section de liaison commune est réalisée sous la forme d'une jonction bout à bout, qui est recouverte par un film à épissure.

4. Procédé selon l'une quelconque des revendications précédentes,
**caractérisé en ce**
**que** la première et la deuxième bande de film (2, 2') sont reliées entre elles au moyen d'un soudage par ultrasons.

5. Procédé selon l'une quelconque des revendications 1 à 3,
**caractérisé en ce**
**que** la première et la deuxième bande de film (2, 2') sont reliées entre elles au moyen d'un soudage par contact, dans lequel un élément chauffant (8h) électrique est utilisé de manière préférée pour réaliser un cordon de soudure.

6. Procédé selon l'une quelconque des revendications 1 à 3,
**caractérisé en ce**
**que** la première et la deuxième bande de film (2, 2') sont reliées entre elles au moyen d'un soudage par laser, dans lequel une couche d'absorption (10) pour la lumière laser est disposée de manière préférée dans la section de liaison sous la première et la deuxième bande de film (2, 2'), dans lequel un film à épissure absorbant la lumière laser est utilisé en particulier de manière préférée en tant que couche d'absorption (10).

7. Procédé selon l'une quelconque des revendications précédentes,
**caractérisé en ce**
**qu'**un cordon de soudure continu est réalisé, qui est réalisé de manière préférée sous une forme oscillante.

8. Procédé selon l'une quelconque des revendications 1 à 6,
**caractérisé en ce**
**qu'**un cordon de soudure discontinu est réalisé, qui est réalisé de manière préférée sous une forme oscillante.

9. Procédé selon l'une quelconque des revendications précédentes,
**caractérisé en ce**
**que** la première et la deuxième bande de film (2, 2') sont orientées l'une par rapport à l'autre de telle sorte que les motifs et/ou les marques de repérage disposés sur la première bande de film (2) sont orientés par rapport aux motifs et/ou aux marques de repère disposés sur la deuxième bande de film (2') dans la section de liaison (3) dans le registre avec une tolérance de position supérieure à +/- 0,5 mm.

10. Procédé selon l'une quelconque des revendications précédentes,
**caractérisé en ce**
**qu'**avant la réalisation du joint de soudure, la strate décorative (23) est retirée localement dans la zone du cordon de soudure.

11. Procédé selon l'une quelconque des revendications précédentes,
**caractérisé en ce**
**qu'**une première et une deuxième bande de film (2, 2') de ce type sont reliées entre elles, qui présentent une couche de colle.
